# EUROPEAN PATENT SPECIFICATION

(11) **EP 3 610 291 B1**
(45) Date of publication and mention of the grant of the patent: **21.12.2022**
(21) Application number: 18720980.4
(22) Date of filing: 10.04.2018
(51) Int. Cl.: G01S 17/88, G01S 7/48, G01S 17/42, G06V 40/10, G06V 20/52

(54) **METHOD OF HUMAN BODY RECOGNITION AND HUMAN BODY RECOGNITION SENSOR**
VERFAHREN ZUR ERKENNUNG VON MENSCHLICHEN KÖRPERN UND ERKENNUNGSSENSOR FÜR MENSCHLICHEN KÖRPER
PROCÉDÉ DE RECONNAISSANCE DE CORPS HUMAIN ET CAPTEUR DE RECONNAISSANCE DE CORPS HUMAIN

(30) Priority: 10.04.2017 EP 17165849
(43) Date of publication of application: 19.02.2020
(73) Proprietor: BEA S.A., 4031 Angleur (BE)
(72) Inventor: RADERMECKER, Gautier, 4000 Liège (BE)
(74) Representative: Puschmann Borchert Kaiser Klettner Patentanwälte Partnerschaft mbB
(86) International application number: PCT/EP2018/059186
(87) International publication number: WO 2018/189191

(56) References cited:
- WO-A1-2012/042043
- AKAMATSU SHUN-ICHI ET AL: "Development of a person counting system using a 3D laser scanner", 2014 IEEE INTERNATIONAL CONFERENCE ON ROBOTICS AND BIOMIMETICS (ROBIO 2014), IEEE, 5 December 2014 (2014-12-05), pages 1983-1988, XP032765216, DOI: 10.1109/ROBIO.2014.7090627 cited in the application
- NISHIDA DAIKI ET AL: "Development of Intelligent Automatic Door System", 2014 IEEE INTERNATIONAL CONFERENCE ON ROBOTICS AND AUTOMATION (ICRA), IEEE, 31 May 2014 (2014-05-31), pages 6368-6374, XP032650086, DOI: 10.1109/ICRA.2014.6907799

## Description

The invention refers to a method for human body recognition and a human recognition sensor for detecting an object in a monitored area and deciding whether or not the detected object is a human body.

EP 2 741 263 B1 discloses a human recognition sensor for intrusion detection which comprises a distance acquiring unit to define points of reflection of a detected object and a human recognition unit to define whether a detected object is a human body, dependent on an estimated width and height of an object.

Akamatsu Shun-Ichi et al. "Development of a person counting system using 3D laser scanner", 2014 IEEE International conference on robotics and BIOMIMETICS, IEEE, 5 December 2014, pages 1983-1988, discloses a 3D- laser scanner for counting persons. The 3D-Laserscanner creates a 3D - cloud of detected points. The points of the 3D-cloud are grouped according to a grouping algorithm. The separate groups are then evaluated to an object height, by subtraction of the lowest point from the highest point of a cloud (z-values). Furthermore, an object area is defined by evaluating the x-y projection of the points of an object, where a rectangular approximation is made. The longer side of the rectangular is defined as an object width and the short side as an object depth. The decision whether or not an object is a human being or not is based on the comparison of absolute values of object height, object depth and object width.

WO 2012/042043 A1 also discloses a person detection unit to apply an access control system based on a laser scanner. The detection unit basically evaluates if there is a situation, where more than one person is present in the sensor area. This is done by evaluating a height profile that is basically evaluated by determining maxima and minima of the profile.

It is the object of the invention to improve the accuracy of the human detection sensor for controlling purposes.

The invention refers to a method of analysing a detected object within a monitored area and deciding whether or not the detected object is a human body with a laser scanner comprising the steps: the laser scanner generates at least one laser curtain, where each laser curtain is generated by multiple pulses evaluated by time of flight measurement of single pulses to generate the distance of the points of reflection with respect to the laser scanner position. Furthermore, a combination of distances of the points of reflection with the direction of the pulse is done to retrieve a position in a predefined detection zone within a monitored area. The retrieved position of the points of reflection belonging to a detected object are projected into an evaluation plane having a Z-axis that is related to the height and a perpendicular axis to the Z-axis that is related to the width in the direction of the lateral extension of the laser curtain.

According to the invention the evaluation plane is evaluated based on the density distribution of the points of reflection over the Z-axis and the evaluation result is compared to anthropometric parameters.

The monitored area is defined by the laser curtain and has a vertical height direction and two lateral directions, a depth and a width, where all are perpendicular to one another. In case of a single vertical laser curtain the depth of the monitored area equals the depth of the laser curtain.

The evaluation plane may have a Z-axis that matches the vertical axis of the vertical plane and / or an evaluation width extension that matches the width of the monitored area. Nevertheless, the Z-axis e.g. may be defined along a laser curtain inclined to the vertical direction, but the width may still correspond to the width of the laser curtain.

Anthropometric parameters according to the invention are human body measures and/or human body proportions.

Anthropometric parameters especially are parameters that especially relate to height, width, shoulder width, shoulder height, head width, total height of a human body.

Based on the density distribution in the evaluation plane the evaluation unit decides, whether or not the density distribution corresponds to that of a human body.

To determine whether a detected object is a human body, the density distribution along the Z-axis is evaluated, where the Z-axis represents the height of a detected object.

The density distribution corresponding to a human body comprises two peaks, where one peak is approximately at the top of the head and the second peak is approximately at the top of the shoulder. According to the invention, by determining the peaks in the density distribution along the z-axis a head height and a shoulder height of a human body can easily be identified and compared to anthropometric parameters.

The determination is preferably done to determine the ratio of the height of the head to the height of the shoulder. As the ratio head to shoulder height is an anthropometric parameter that is essentially equal for all human beings and above all is not dependent on absolute height, a reliable distinction of human beings is possible according to the evaluation of the density distribution.

In addition to the density distribution the evaluation unit may evaluate the width of an object in a further step. Therefore, it analyses the points of reflection in the evaluation plane belonging to an object at the position of the peaks of density distribution and determines the effective width of head and shoulder of the human body.

Due to the integration of this information the evaluation can be achieved in a more precise manner. A valid head and shoulder width ratio can be predefined to check whether it matches the result derived from the evaluation density distribution evaluation. The result can be compared to the result of the density evaluation. If both evaluations are positive, it is quite likely that the detected object is a human body.

Furthermore, the evaluation unit may count the number of points of reflection within the peak zones of the density distribution evaluation. If the number is below a predefined number, the measurement will be disregarded.

The movement of the human body takes place in a moving direction, where the moving direction basically is a vector of width and depth. Especially in door applications the moving direction is perpendicular to the width direction and, therefore, the orientation of the shoulders of a human body is usually aligned with the width direction.

According to the invention single evaluation objects can be identified out of all points of reflection of the evaluation plane and a subset of points of reflection is created for each evaluation object, which is then subjected to density distribution analysis.

According to this there can be a decision on each present evaluation object whether or not it corresponds to a human body. As a consequence, detection sensors can base their decision on controlling doors or lights on the information whether a detected object is a human body or not.

The determination of single evaluation objects is done by the evaluation unit, where the evaluation plane, containing all points of reflection, is parsed by a neighbor zone, from the top to the bottom of the plane. Once a point or points of reflection are newly present in the neighbor zone, all the points of reflection within the neighbor zone are taken into account and the newly present point of reflection is assigned to an evaluation object. It is assigned to a new evaluation object, if there is no other point atop the newly present point within the neighbor zone, or to an existing evaluation object where the point of reflection has the smallest distance to the mathematical center of gravity of an existing evaluation object.

According to this procedure all points of reflection are grouped in a subset of points of reflection belonging to an evaluation object.

According to this evaluation even two or more people walking parallel through the laser curtain can be distinguished.

According to a further improvement of the invention the points of reflection can be time integrated on the evaluation plane. This leads to a higher density of points of reflection and, therefore, evaluation objects can be better distinguished and detected objects can be classified in a more reliable way.

The time integration can be done based on a fixed time interval after a first detection of a detected object occurred.

According to a further improvement of the invention the time integration is done in a way that the subset of points of reflection is assigned to a time object by projecting the points of reflection in a width-time plane, where the height of the point of reflection is ignored. The width axis stretches depending on a predefined accumulation/integration time.

The points of reflection projected into the time-width plane are clustered as subsets assigned to time objects. Each time object is the main-set of points of reflection to generate the evaluation plane, where the time component of the point of reflection is neglected but the height is taken into account.

According to this procedure a more precise decision on the delimitation of time objects is possible. Therefore, the acquired information is more accurate with regard to the amount of human beings passing subsequently.

The clustering of the time objects is preferably done by using DBSCAN Algorithm.

Preferably, the scanner generates multiple laser curtains that are tilted with respect to each other. Due to several laser curtains a more precise picture can be taken and the motion direction of the object can be taken into account.

The scanner preferably evaluates and/or generates multiple laser curtains subsequently.

As by taking into account at least two curtains, which are tilted relative to each other, two depth positions perpendicular to the width of the scanning plane can be evaluated. As the two planes are scanned subsequently the movement direction of a human being can be detected as the center of gravity in scanning time changes in the time width diagram in the moving direction of the detected object.

By using multiple laser curtains, a predefined accumulation time for time integration is longer or is equal to the time that is necessary for scanning the present laser curtains of the sensor.

The evaluation unit may not accept points of reflection that clearly refer to background effects.

Therefore, background noise can be reduced at this stage

The invention further refers to a human recognition sensor for analysing an object in a monitored area and deciding whether or not the object is a human body, comprising a laser scanner and an evaluation unit that is enabled to execute a method as described above.

A further aspect refers to a sensor that generates at least one laser curtain that is tilted less than 45° relative to the vertical axis. This allows an overhead scanning so that human bodies may be recognized when passing below the sensor.

The human recognition sensor may comprise a computational unit, preferably a microprocessor, microcontroller or FPGA on which the evaluation unit is implemented as software program, executing the above described method.

Further advantages, features and potential applications of the present invention may be gathered from the description which follows, in conjunction with the embodiments illustrated in the drawings.

Throughout the description, the claims and the drawings, those terms and associated reference signs will be used as are notable from the enclosed list of reference signs. In the drawings is shown
- Fig. 1: a schematic view of a laser scanner according to the invention;
- Fig. 2: a first embodiment of the human recognition sensor having one scanning curtain;
- Fig. 3: method of a human recognition by a sensor of Fig.1;
- Fig. 4: a second embodiment of a human recognition sensor having two scanning curtains;
- Fig. 5a: working principle of the evaluation unit describing a first step by generating time objects;
- Fig. 5b: enlarged view of a created time object;
- Fig. 6a: a view of the time object of Fig. 4b in the evaluation plane;
- Fig. 6b: a view of the time object after separation of human objects;
- Fig. 7a: a separated human object of Fig. 5b;
- Fig. 7b: a density distribution of the human object of Fig. 6a;
- Fig. 8a: a time width view on the time object of Fig. 4b for the first scanning curtain, and
- Fig. 8b: a time width view for the time object of Fig. 4b for the second curtain.

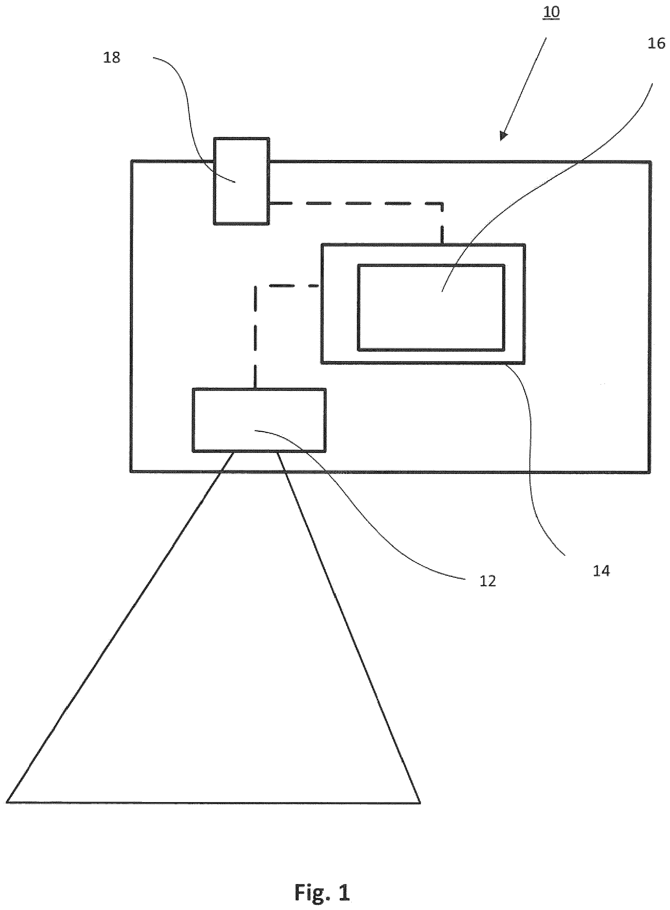

Fig. 1 shows a first embodiment of the human recognition sensor 10 according to the invention. The human recognition sensor 10 comprises a laser scanner 12, a processing unit 14, where the processing unit 14 comprises an evaluation unit 16. The processing unit 14 is connected to the laser scanner 12 as well as to an output port 18 to which information can be fed that contains information about human recognition results.

The laser scanner of the embodiment according to Fig. 1 uses at least one laser curtain that is evaluated by taking into account the point of reflections that are derived by light pulses (where the time of flight (TOF) is determined. According to this time of flight determination and the direction of the pulse a position of the point of reflection with regard to the laser scanner is derivable. This evaluation can be done by the processing unit 14, where relevant points of reflection are determined and their position is fed to the evaluation unit 16 that executes the method according to the invention as described in more detail with regard to the following Figs.

According to this setup the evaluation unit 16 receives the data of the point of reflection with regard to the laser scanner 12.

The evaluation unit 16 then analyses the point of reflections according to the invention as will be further described in the following Figs. And, as a result, will output a signal containing information whether or not a detected object is a human body.

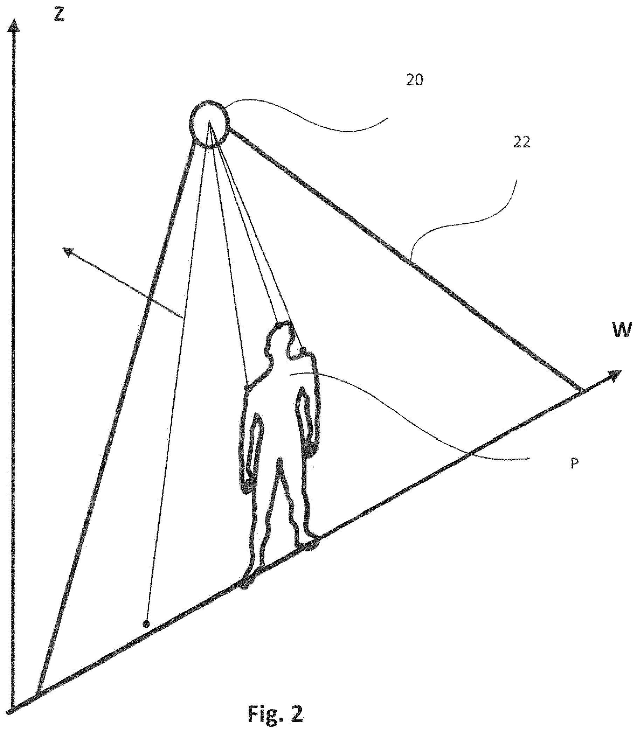

Fig. 2 shows an exemplary application where the human recognition sensor 20 is mounted on a top position; there are objects passing below. The human recognition sensor 20 projects one laser curtain in a vertical direction, which stretches in a width direction W. It is shown as a person P is moving through the laser curtain 22 in a moving direction M. The passing person P reflects light pulses where the laser scanner of the human recognition sensor 20 evaluates the point of reflection within the laser curtain.

The evaluation unit of the sensor 20 is set in a way that it evaluates and evaluation plane EP that matches the laser curtain 22. Therefore, the evaluation plane EP has a Z- axis in a vertical direction and the same width axis W as the laser curtain 22.

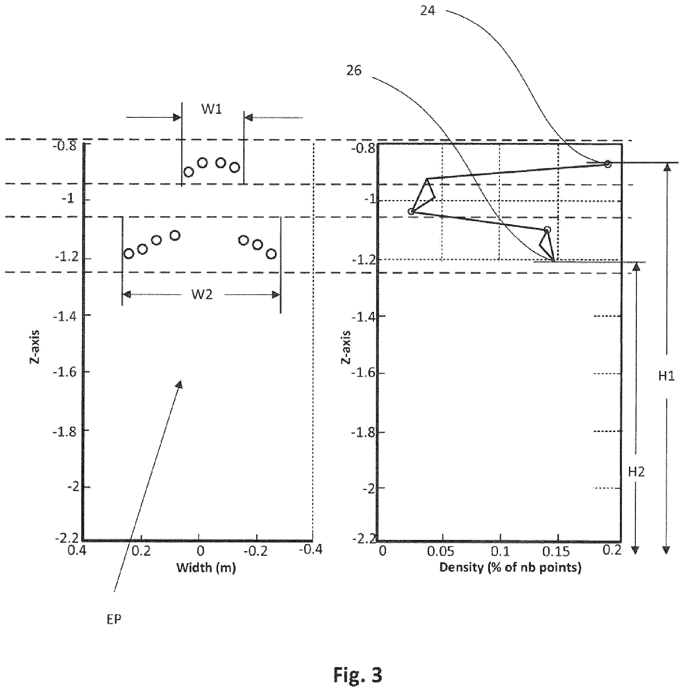

Fig. 3 shows the method of human body recognition by evaluation of the evaluation plane EP, where in this case the points of reflection do not have to be projected into the evaluation plane EP as the evaluation plane EP matches the laser curtain 22. The points of reflection are applied to the evaluation plane EP according to their position. The evaluation plane EP has a Z-axis and a widthaxis W.

According to the invention the evaluation unit 16 now computes a density distribution along the Z- axis of the evaluation plane EP, where in this density distribution two peaks are supposed to be derivable

If there is e.g. only one peak, the measurement is discarded and the evaluation object is not identified as a human body.

If there are two peaks 24, 26, as would be the case by detecting a human body, the position H1, H2 of the position of the peaks on the Z-axis is taken. The first peak 24 is assumed to provide the overall height H1 of the object, being the head when viewing the human body, and the second peak 26 is supposed to be the shoulder height H2 of a person. The ratio of overall height H1 and shoulder height H2 is compared to a range of predefined human body proportions. Furthermore, the head height (the distance between shoulder height and overall height; H1-H2) may be taken into account as well, as human body proportions change with the age of the human beings.

According to this it is not necessary to limit the measurement to a minimum height that possibly might exclude children from detection, as they can be defined according to the above described evaluation.

Within the evaluation plane EP the width W2 of the shoulders and the position H2 of the second density peak 26 can be determined. In the area of the first peak 24, the width of the head W1 can be determined. Due to these further parameters more precise evaluation of the object with regard to human body recognition can be achieved.

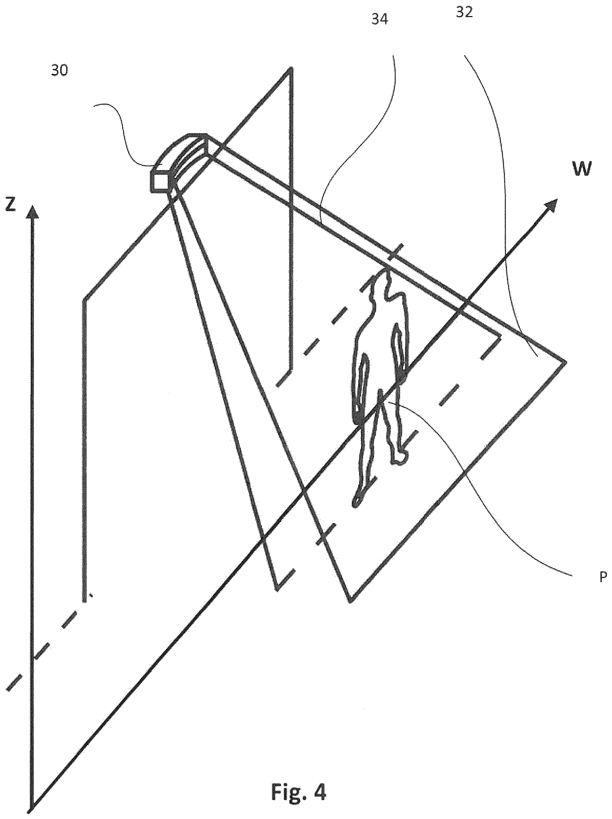

Fig. 4 shows a setup with a human recognition sensor 30 that generates multiple laser curtains 32, 34. The human recognition sensor 30 in this case is mounted above the door frame and monitors the area in front of the door. The laser curtains 32, 34 are tilted with regard to the vertical axis and with regard to each other and stretch parallel to the door in a width direction W. The evaluation plane EP is set parallel to the door plane.

The laser scanner of the human recognition sensor 30 derives the position of the points of reflection of the detected object relative to the laser scanner, where the evaluation unit projects them into the evaluation plane EP as evaluation objects.

The persons P, when moving through the laser curtains 32, 34, produce points of reflection during an acquisition period.

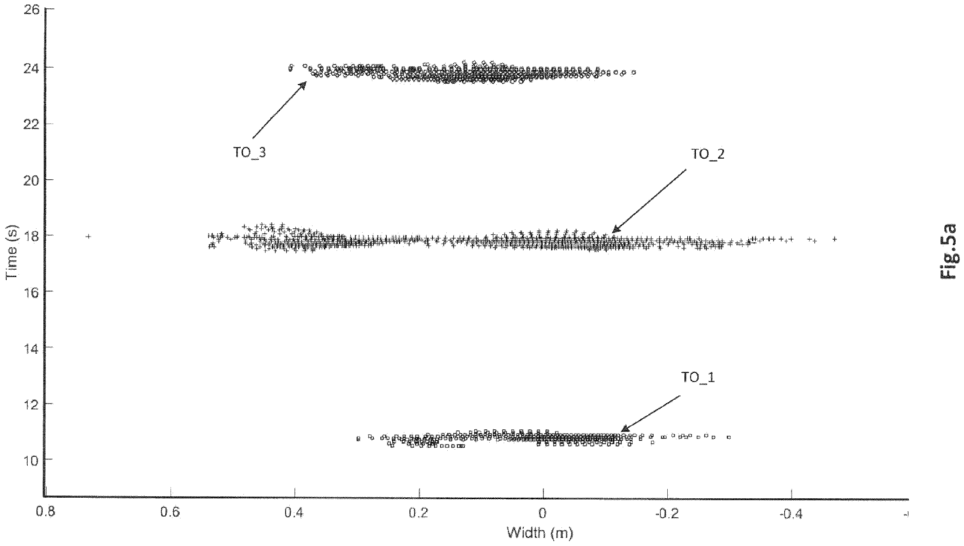

As described in Fig. 5a the acquisition period is about 15 seconds. In the described case four detected objects subsequently pass through the laser curtains, where two detected objects pass the laser curtains at the same time. The evaluation unit is embodied to project the acquired points of reflection in a time-width plane.

In this time width-plane the present points of reflection are clustered to time-objects TO_1, TO_2, TO_3. This is done by using the DBSCAN algorithm.

The four detected objects passing the laser curtain during the acquisition period in this case lead to the definition of three time objects TO_1, TO_2, TO_3.

As shown in an enlarged view of the time-object TO_2 there could be more detected objects in the time object TO_2.

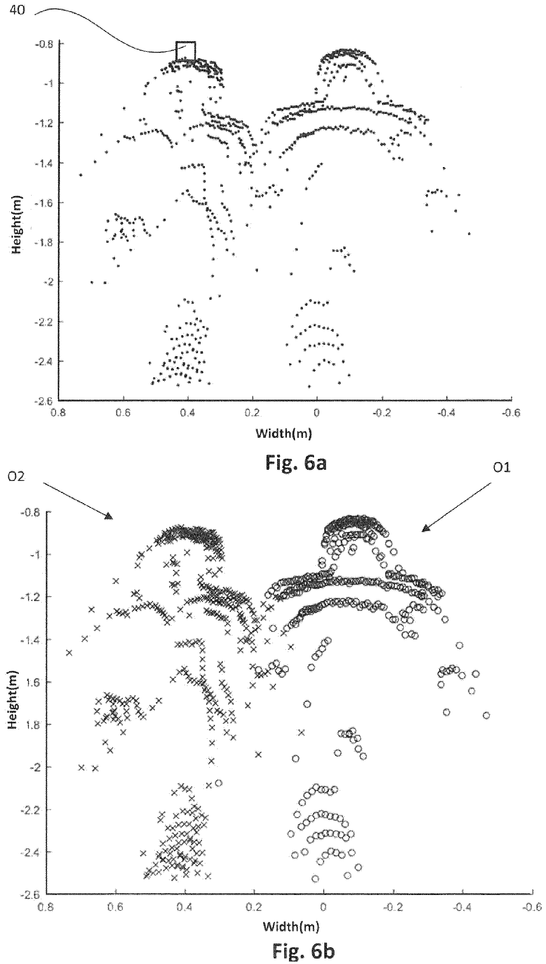

The evaluation unit is furthermore furnished to take the points of reflection of each time object and projects them into the evaluation plane EP, as shown in Fig. 6a. The evaluation plane has a vertical Z-axis and a width axis W.

In a next separation step the evaluation unit assigns the points of reflection of each time object TO_1, TO_2, TO_3 to objects.

This is done by analyzing the evaluation plane EP from top to the bottom and assigning each point to an evaluation object.

The determination of single evaluation objects O1 is done by the evaluation unit, where the evaluation plane EP contains all points of reflection of the time-object TO_ 2. The evaluation plane EP is parsed by a neighbor zone 40 from the top to the bottom of the evaluation plane EP. Once a point or points of reflection are newly present in the neighbor zone 40, all the points of reflection within the neighbor zone 40 are taken into account and the newly present point of reflection is assigned to an evaluation object; e.g. see Fig. 6b object O2 (crosses) and object O1 (circles). It is assigned to a new evaluation object, if there is no other point atop the newly present point within the neighbor zone, or to an existing evaluation object where the point of reflection has the smallest distance to the mathematical center of gravity of an existing object, O1 or O2. According to this procedure all points of reflection are grouped in a subset of points of reflection belonging to an evaluation object O1, O2.

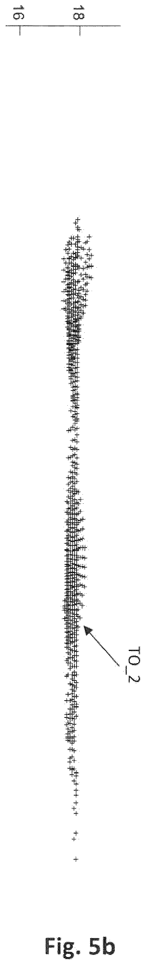

As a result Fig. 6b shows that the time object TO_2 of Fig. 5b has been separated into two evaluation objects O1, O2.

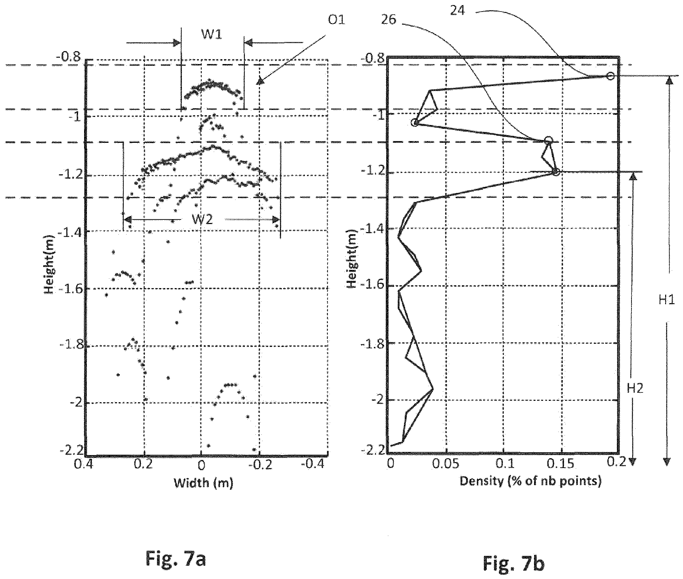

Each object in this evaluation plane as shown in Fig. 7a is then subjected to the density distribution analysis along the Z-axis as shown in Fig. 7b. In Fig. 7a, 7b object O1 is analyzed. The further evaluation to determine whether or not an object is a human body is done as described in Fig. 3 by comparing the applied measurements to anthropometric data.

According to a further improvement of the invention the evaluation unit may be enabled to analyse the moving direction of objects. This enables the human recognition sensor to provide direction information with the object information. E.g. this allows a count on how many people entered or left a building or to do the counting itself and just to provide the net count on the output port.

The moving direction is analyzed by comparing the accumulated points of reflection of the two curtains 32, 34 over a short period of time, e.g. 500ms. The points of reflection are projected into a time width plane, in which the mathematical center of gravity of the present points of reflection is determined for each curtain.

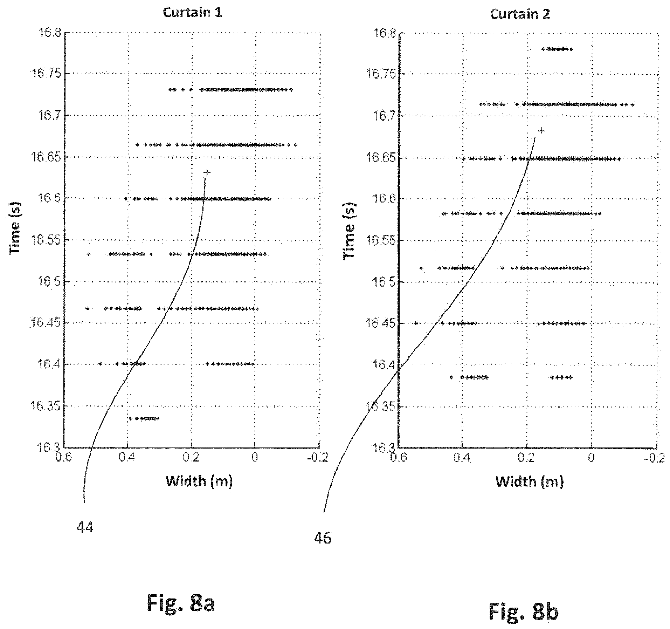

According to the shift of the center of gravity, indicated by the cross in Fig. 8a and Fig. 8b, the center of gravity passes firstly through the first curtain 32 and then through the second curtain 34, which is then the moving direction of the object.

### List of reference signs

- 10: human recognition sensor
- 12: laser scanner
- 14: computational unit
- 16: evaluation unit
- 18: output port
- 20: human recognition sensor
- 22: laser curtain
- 24: peak
- 26: peak
- 30: human recognition sensor
- 32: first laser curtain
- 34: second laser curtain
- 44: center of gravity
- 46: center of gravity

- TO_1: time object
- TO_2: time object
- TO_3: time object

- O1: evaluation object
- O2: evaluation object
- EP: evaluation plane
- P: person
- M: moving direction
- Z: Z-axis
- W: width axis

## Claims

1. Method of human body recognition by analysing a detected object (P) in a monitored area and deciding whether or not the detected object is a human being with a laser scanner (12) comprising:
the laser scanner (12) generates at least one laser curtain ( 22, 32, 34), where each laser curtain (22, 32, 34) is generated by multiple pulses evaluated by time of flight (TOF) measurement of single pulses to generate the distance of the points of reflection with respect to the laser scanner position;
combination of distances of the points of reflection with the direction of the pulse to retrieve a position in a predefined detection zone within a monitored area;
projecting the points of reflection belonging to a detected object into an evaluation plane (EP) as evaluation objects (O1, O2), where the evaluation plane (EP) has a Z-axis that is related to the height and an axis perpendicular to the Z-axis that is related to the width in the direction of the lateral extension of the laser curtain (22, 32, 34), **characterized in that** the evaluation plane (EP) is evaluated based on a density distribution of the points of reflection along the Z-axis,
where a head height (H1) and a shoulder height (H2) are derived by evaluating the peaks (24, 26) of the density distribution and the evaluation result is compared to anthropometric parameters.

2. Method according to claim 1 **characterized in that** the anthropometric parameters are human body measures and/or human body proportions.

3. Method according to claim 1 or 2 **characterized in that** the points of reflection belonging to an evaluation object (O1, O2) are evaluated based on density distribution over height, where accordingly the head height (H1) and the shoulder height (H2) are derived from, and the anthropometric parameter is the head height (H1) to shoulder height (H2) ratio, which is compared to a predefined range for a human body.

4. Method according to any one of the preceding claims **characterized in that** the evaluation plane (EP) is evaluated due to density distribution over height, where a head width (W1) and a shoulder width (W2) are derived by taking the width (W1, W2) within the evaluation plane at the position of the peaks in the density distribution.

5. Method according to claim 4 **characterized in that** the anthropometric parameter is the head width (W1) to shoulder width (W2) ratio, which is compared to a predefined range for human body proportion.

6. Method according to one any of the preceding claims **characterized in that** the sensor generates and evaluates a plurality of laser curtains (22, 32, 34) that are tilted with regard to each other.

7. Method according to claim 6 **characterized in that** the plurality laser curtains (32, 34) are subsequently scanned and measure the motion direction (M) of a human body and/or analysed object.

8. Method according to any one of the preceding claims **characterized in that** the points of reflection are time integrated over an acquisition period.

9. Method according to claim 8 **characterized in that** a subset of points of reflection is assigned to time objects (TO_1, TO_2, TO_3) that are defined by clustering points of reflection in a width-time plane over the acquisition period.

10. Method according to claim 9 **characterized in that** the subset of points of reflection assigned to the time-object (TO_1, TO_2, TO_3) are projected into the evaluation plane for evaluation.

11. Method according to any one of the preceding claims **characterized in that** a subset of points of reflection in the evaluation plane (EP) is assigned to an evaluation object (O1, O2) by clustering the points of reflection.

12. Method according to claim 11 **characterized in that** the points of reflection are analysed by analysing the evaluation plane from top to bottom in Z-direction and assigning each point to an evaluation object, wherein if there is no point above the currently analysed point in Z-direction within a certain range, the currently analysed point is assigned to a new object, if there is a point within a certain range, the currently analysed point is assigned to an existing object with the smallest distance of the currently analysed point to the mathematical center of gravity of the existing object.

13. Human recognition sensor for detecting and analysing a detected object (P) in a monitored area and deciding whether or not the detected object is a human being, comprising a laser scanner (12) and an evaluation (16) unit that is enabled to execute a method according to any one of the preceding claims.

14. Human recognition sensor according to claim 13 **characterized in that** the evaluation unit (16) is a computational unit, e.g. microprocessor and the method is a computer implemented method.

15. Human recognition sensor according to any one of the preceding claims 13 to 14 **characterized in that** the at least one laser curtain (22, 32, 34) is tilted less than 45° relative to the vertical axis.

## Patentansprüche

1. Verfahren zur Erkennung von menschlichen Körpern durch Analysieren eines erkannten Objekts (P) in einem überwachten Bereich und Entscheiden, ob es sich bei dem erkannten Objekt um eine Person handelt oder nicht, mit einem Laserscanner (12), umfassend:
Erzeugen zumindest eines Laservorhangs (22, 32, 34) durch den Laserscanner (12), wobei jeder Laservorhang (22, 32, 34) durch Mehrfachpulse erzeugt wird, die durch Laufzeitmessung (TOF) von Einzelpulsen ausgewertet werden, um den Abstand der Reflexionspunkte in Bezug auf die Position des Laserscanners zu erzeugen;
Kombinieren der Entfernungen der Reflexionspunkte mit der Richtung des Impulses, um eine Position in einem vordefinierten Erkennungsbereich innerhalb eines überwachten Bereichs zu ermitteln;
Projizieren der zu einem erkannten Objekt gehörenden Reflexionspunkte als Auswerteobjekte (O1, O2) in eine Auswerteebene (EP), wobei die Auswerteebene (EP) eine auf die Höhe bezogene Z-Achse und eine auf die Breite bezogene Achse senkrecht zur Z-Achse in Richtung der seitlichen Ausdehnung des Laservorhangs (22, 32, 34) hat, **dadurch gekennzeichnet, dass** die Auswerteebene (EP) anhand einer Dichteverteilung der Reflexionspunkte entlang der Z-Achse ausgewertet wird, wobei die Ableitung einer Kopfhöhe (H1) und einer Schulterhöhe (H2) durch Auswertung der Spitzen (24, 26) der Dichteverteilung erfolgt und das Auswerteergebnis mit anthropometrischen Parametern verglichen wird.

2. Verfahren nach Anspruch 1, **dadurch gekennzeichnet, dass** es sich bei den anthropometrischen Parametern um menschliche Körpermaße und/oder menschliche Körperproportionen handelt.

3. Verfahren nach Anspruch 1 oder 2, **dadurch gekennzeichnet, dass** die Auswertung der zu einem Auswerteobjekt (O1, O2) gehörenden Reflexionspunkte anhand der Dichteverteilung über die Höhe erfolgt, wobei dementsprechend die Kopfhöhe (H1) und die Schulterhöhe (H2) davon abgeleitet werden, und es sich bei dem anthropometrischen Parameter um das Verhältnis von Kopfhöhe (H1) zu Schulterhöhe (H2) handelt, das mit einem vordefinierten Bereich für einen menschlichen Körper verglichen wird.

4. Verfahren nach einem der vorhergehenden Ansprüche, **dadurch gekennzeichnet, dass** die Auswertung der Auswerteebene (EP) anhand der Dichteverteilung über die Höhe erfolgt, wobei sich eine Kopfbreite (W1) und eine Schulterbreite (W2) aus der Breite (W1, W2) innerhalb der Auswerteebene an der Position der Spitzenwerte der Dichteverteilung ergeben.

5. Verfahren nach Anspruch 4, **dadurch gekennzeichnet, dass** der anthropometrische Parameter das Verhältnis der Kopfbreite (W1) zur Schulterbreite (W2) ist, das mit einem vorbestimmten Bereich für menschliche Körperproportionen verglichen wird.

6. Verfahren nach einem der vorhergehenden Ansprüche, **dadurch gekennzeichnet, dass** der Sensor eine Mehrzahl gegeneinander geneigte Laservorhänge (22, 32, 34) erzeugt und auswertet.

7. Verfahren nach Anspruch 6, **dadurch gekennzeichnet, dass** die Mehrzahl von Laservorhängen (32, 34) anschließend gescannt werden und die Bewegungsrichtung (M) eines menschlichen Körpers und/oder analysierten Objekts messen.

8. Verfahren nach einem der vorhergehenden Ansprüche, **dadurch gekennzeichnet, dass** die Reflexionspunkte über einen Erfassungszeitraum zeitlich integriert werden.

9. Verfahren nach Anspruch 8, **dadurch gekennzeichnet, dass** eine Teilmenge von Reflexionspunkten Zeitobjekten (TO_1, TO_2, TO_3) zugeordnet wird, die durch ein Clustering von Reflexionspunkten in einer Breite-Zeit-Ebene über den Erfassungszeitraum definiert sind.

10. Verfahren nach Anspruch 9, **dadurch gekennzeichnet, dass** die dem Zeitobjekt (TO_1, TO_2, TO_3) zugeordnete Teilmenge von Reflexionspunkten zur Auswertung in die Auswerteebene projiziert wird.

11. Verfahren nach einem der vorhergehenden Ansprüche, **dadurch gekennzeichnet, dass** eine Teilmenge von Reflexionspunkten in der Auswerteebene (EP) durch ein Clustering der Reflexionspunkte einem Auswerteobjekt (01, 02) zugeordnet wird.

12. Verfahren nach Anspruch 11, **dadurch gekennzeichnet, dass** die Analyse der Reflexionspunkte dadurch erfolgt, dass die Auswerteebene von oben nach unten in Z-Richtung analysiert wird und jeder Punkt einem Auswerteobjekt zugeordnet wird, wobei, wenn innerhalb eines bestimmten Bereichs kein Punkt über dem aktuell analysierten Punkt in Z-Richtung vorhanden ist, der aktuell analysierte Punkt einem neuen Objekt zugeordnet wird, wenn innerhalb eines bestimmten Bereichs ein Punkt vorhanden ist, der aktuell analysierte Punkt einem vorhandenen Objekt mit dem geringsten Abstand des aktuell analysierten Punktes zum mathematischen Schwerpunkt des vorhandenen Objekts zugeordnet wird.

13. Personenerkennungssensor zum Erkennen und Analysieren eines erkannten Objekts (P) in einem Überwachungsbereich und Entscheiden, ob es sich bei dem erkannten Objekt um eine Person handelt oder nicht, umfassend einen Laserscanner (12) und eine Auswerteeinheit (16), die zum Ausführen eines Verfahrens nach einem der vorhergehenden Ansprüche befähigt ist.

14. Personenerkennungssensor nach Anspruch 13, **dadurch gekennzeichnet, dass** es sich bei der Auswerteeinheit (16) um eine Recheneinheit, beispielsweise einen Mikroprozessor, handelt und es sich bei dem Verfahren um ein computerimplementiertes Verfahren handelt.

15. Personenerkennungssensor nach einem der vorhergehenden Ansprüche 13 bis 14, **dadurch gekennzeichnet, dass** der zumindest eine Laservorhang (22, 32, 34) um weniger als 45° gegenüber der vertikalen Achse geneigt ist.

## Revendications

1. Procédé de reconnaissance de corps humain par analyse d'un objet (P) détecté dans une zone surveillée et le fait de décider si l'objet détecté est un humain ou non avec un scanner laser (12) comprenant:
le scanner laser (12) génère au moins un rideau laser (22, 32, 34), où chaque rideau laser (22, 32, 34) est généré par de multiples impulsions évaluées par la mesure de temps de vol (TOF) d'impulsions individuelles pour générer la distance des points de réflexion par rapport à la position du scanner laser ;
la combinaison de distances des points de réflexion avec la direction de l'impulsion pour récupérer une position dans une zone de détection prédéfinie à l'intérieur d'une zone surveillée ;
la projection des points de réflexion faisant partie d'un objet détecté dans un plan d'évaluation (EP) en tant qu'objets d'évaluation (O1, O2), où le plan d'évaluation (EP) présente un axe Z qui est lié à la hauteur et un axe perpendiculaire à l'axe Z qui est lié à la largeur dans la direction de l'extension latérale du rideau laser (22, 32, 34), **caractérisé en ce que** le plan d'évaluation (EP) est évalué sur la base d'une distribution de densité des points de réflexion le long de l'axe Z, où une hauteur de tête (H1) et une hauteur d'épaule (H2) sont dérivées par évaluation des crêtes (24, 26) de la distribution de densité et le résultat de l'évaluation est comparé à des paramètres anthropométriques.

2. Procédé selon la revendication 1 **caractérisé en ce que** les paramètres anthropométriques sont des mesures de corps humain et/ou proportions de corps humain.

3. Procédé selon la revendication 1 ou 2 **caractérisé en ce que** les points de réflexion faisant partie d'un objet d'évaluation (O1, O2) sont évalués sur la base de la distribution de densité sur la hauteur, d'où en conséquence la hauteur de tête (H1) et la hauteur d'épaule (H2) sont dérivées, et le paramètre anthropométrique est le rapport hauteur de tête (H1) sur hauteur d'épaule (H2), qui est comparé à une plage prédéfinie pour un corps humain.

4. Procédé selon l'une quelconque des revendications précédentes **caractérisé en ce que** le plan d'évaluation (EP) est évalué du fait de la distribution de densité sur la hauteur, où une largeur de tête (W1) et une largeur d'épaule (W2) sont dérivées en prenant la largeur (W1, W2) à l'intérieur du plan d'évaluation au niveau de la position des crêtes dans la distribution de densité.

5. Procédé selon la revendication 4 **caractérisé en ce que** le paramètre anthropométrique est le rapport largeur de tête (W1) à largeur d'épaule (W2), qui est comparé à une plage prédéfinie pour la proportion de corps humain.

6. Procédé selon l'une quelconque des revendications précédentes **caractérisé en ce que** le capteur génère et évalue une pluralité de rideaux laser (22, 32, 34) qui sont inclinés les uns par rapport aux autres.

7. Procédé selon la revendication 6 **caractérisé en ce que** la pluralité de rideaux laser (32, 34) sont balayés par la suite et mesurent la direction de mouvement (M) d'un corps humain et/ou objet analysé.

8. Procédé selon l'une quelconque des revendications précédentes **caractérisé en ce que** les points de réflexion sont intégrés dans le temps pendant une période d'acquisition.

9. Procédé selon la revendication 8 **caractérisé en ce qu'un** sous-ensemble de points de réflexion est assigné à des objets temporels (TO_1, TO_2, TO_3) qui sont définis par regroupements de points de réflexion dans un plan largeur-temps pendant la période d'acquisition.

10. Procédé selon la revendication 9 **caractérisé en ce que** le sous-ensemble de points de réflexion assigné à l'objet temporel (TO_1, TO_2, TO_3) sont projetés dans le plan d'évaluation pour évaluation.

11. Procédé selon l'une quelconque des revendications précédentes **caractérisé en ce qu'un** sous-ensemble de points de réflexion dans le plan d'évaluation (EP) est assigné à un objet d'évaluation (O1, O2) par regroupement des points de réflexion.

12. Procédé selon la revendication 11 **caractérisé en ce que** les points de réflexion sont analysés par analyse du plan d'évaluation de haut en bas dans la direction Z et assignation de chaque point à un objet d'évaluation, dans lequel s'il n'y a pas de point au-dessus du point analysé actuellement dans la direction Z à l'intérieur d'une certaine plage, le point actuellement analysé est assigné à un nouvel objet, s'il y a un point à l'intérieur d'une certaine plage, le point actuellement analysé est assigné à un objet existant avec la plus petite distance du point actuellement analysé par rapport au centre de gravité mathématique de l'objet existant.

13. Capteur de reconnaissance d'humain pour détecter et analyser un objet (P) détecté dans une zone surveillée et décider si l'objet détecté est un être humain ou non, comprenant un scanner laser (12) et une unité d'évaluation (16) qui est activée pour exécuter un procédé selon l'une quelconque des revendications précédentes.

14. Capteur de reconnaissance d'humain selon la revendication 13 **caractérisé en ce que** l'unité d'évaluation (16) est une unité de calcul, par exemple un microprocesseur et le procédé est un procédé mis en œuvre par ordinateur.

15. Capteur de reconnaissance d'humain selon l'une quelconque des revendications précédentes 13 à 14 **caractérisé en ce que** le au moins un rideau laser (22, 32, 34) est incliné de moins de 45° par rapport à l'axe vertical.
